# EUROPÄISCHE PATENTANMELDUNG

(11) **EP 1 160 540 A1**
(43) Veröffentlichungstag der Anmeldung: **05.12.2001**
(21) Anmeldenummer: 00112058.3
(22) Anmeldetag: 03.06.2000
(51) Int. Cl.: G01C 3/08, G02B 27/09, G01S 7/481

(54) **Optischer Entfernungsmesser**

(71) Anmelder: Leica Geosystems AG, 9435 Heerbrugg (CH)
(72) Erfinder: Gächter, Bernhard, Dr., 9436 Balgach (CH); Vokinger, Urs, Dr., 9434 Au (CH)
(74) Vertreter: Kaminski, Susanne, Dr.

(57) **Zusammenfassung**

Zwecks Verbesserung der Zielausleuchtung weist ein Sender mehrere Teillichtquellen (3a, 3b, 3c, 3d) auf, deren Teilstrahlen (5a, 5b, 5c, 5d) durch eine Strahlsammeloptik (2) gesammelt und in die Apertur eines Kollimators (1) gelenkt werden. Die Strahlsammeloptik (2) weist zwei zur Hälfte verspiegelte Platten (12a, 12b) auf, welche jeweils zwei gleich polarisierte Teilstrahlen (5a,b; 5c,d) nebeneinander auf einen Polarisationswürfel (13) lenken, wo die aufeinander senkrechten und orthogonal polarisierten Paare von Teilstrahlen überlagert werden.

## Beschreibung

### Technisches Gebiet

Die Erfindung betrifft einen optischen Entfernungsmesser, wie sie z. B. bei Vermessungen von Grundstücken und Bauten eingesetzt werden.

### Stand der Technik

Gattungsgemässe optische Entfernungsmesser sind seit längerem bekannt. Die Leuchtdichte der gewöhnlich eingesetzten Sender mit einer Laserdiode als Lichtquelle ist jedoch in der Regel geringer als es unter dem Gesichtspunkt des Augenschutzes zulässig wäre. Ausserdem weist der von einer einzelnen Laserdiode ausgehende Lichtstrahl gewöhnlich einen ungünstigen, sehr langgestreckten Querschnitt auf, was zu einer unzureichenden Konzentration auf das Ziel und in der Folge zu ungenügendem Lichtstrom und Messfehlern führen kann. Aus diesen Gründen sind Reichweite sowie Messgenauigkeit und -sicherheit gattungsgemässer Entfernungsmesser geringer als es wünschenswert und grundsätzlich auch möglich wäre.

### Darstellung der Erfindung

Der Erfindung liegt die Aufgabe zu Grunde, einen gattungsgemässen optischen Entfernungsmesser anzugeben, dessen Sender eine hohe Leuchtdichte aufweist und eine gute Zielausleuchtung und hohen Lichtstrom am Ziel sicherstellt. Die durch die Erfindung erzielten Vorteile liegen vor allem in einer entscheidenden Verbesserung der Reichweite, d. h. der maximalen Messdistanz oder, bei gegebener Reichweite, einer Erhöhung der Messgenauigkeit. Diese Vorteile werden mit verhältnismässig kleiner Senderoptik erzielt, was es erlaubt, die Abmessungen des gesamten Geräts gering zu halten.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: ein Schema des Senders eines erfindungsgemässen Entfernungsmessers gemäss einer ersten Ausführungsform,
- Fig. 1b: den Strahlquerschnitt des Senders gemäss der ersten Ausführungsform am Ziel,
- Fig. 2a: ein Schema des Senders eines erfindungsgemässen Entfernungsmessers gemäss einer zweiten Ausführungsform,
- Fig. 2b: den Strahlquerschnitt des Senders gemäss der zweiten Ausführungsform am Ziel,
- Fig. 3: ein Schema des Senders eines erfindungsgemässen Entfernungsmessers gemäss einer dritten Ausführungsform,
- Fig. 4: ein Schema des Senders eines erfindungsgemässen Entfernungsmessers gemäss einer vierten Ausführungsform,
- Fig. 5: schematisch den Aufbau des Senders eines erfindungsgemässen Entfernungsmessers gemäss einer fünften Ausführungsform und
- Fig. 6: die Apertur des Kollimators des erfindungsgemässen Entfernungsmessers gemäss der fünften Ausführungsform und den Strahlquerschnitt an demselben.

### Wege zur Ausführung der Erfindung

Ein erfindungsgemässer optischer Entfernungsmesser weist einen Sender auf sowie einen Empfänger, welcher z. B. in bekannter Weise mit einer Optik und avalanche-Photodioden aufgebaut sein kann sowie eine elektronische Steuer- und Auswerteeinheit ebenfalls bekannter Ausbildung, welche die Aussendung von Lichtimpulsen durch den Sender steuert und das Ausgangssignal des Empfängers, der die reflektierten Lichtimpulse empfängt, auswertet. Die Entfernungsmessung kann durch Laufzeitmessung oder nach dem Phasenvergleichsverfahren erfolgen. 'Licht' ist dabei stets so zu verstehen, dass es sich nicht auf den sichtbaren Bereich des Spektrums beschränkt, sondern mindestens auch den Infrarotbereich umfasst.

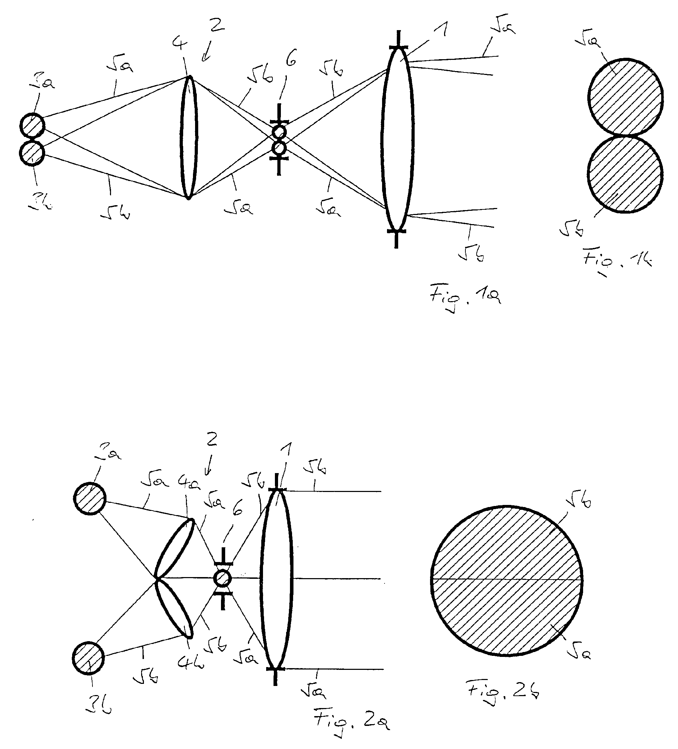

Der Sender eines erfindungsgemässen Entfernungsmessers kann in seinem grundsätzlichen Aufbau grosse Unterschiede aufweisen. In jedem Fall jedoch weist er (Fig. 1-5) einen Kollimator 1 auf und eine demselben vorgeordnete, jeweils aus mindestens zwei Teillichtquellen bestehende Lichtquelle sowie eine im Strahlengang zwischen der Lichtquelle und dem Kollimator angeordnete Strahlsammeloptik 2. Jede Teillichtquelle enthält eine Laserdiode, die gewöhnlich ein Kantenemitter ist oder auch mehrere in der Richtung der Emissionskanten aufeinanderfolgend angeordnete derartige Laserdioden. Die allen Laserdioden gemeinsame Wellenlänge liegt im Infrarotbereich, vorzugsweise zwischen 850 nm und 980 nm oder bei 1'550 nm. Der Querschnitt des von einer Laserdiode ausgehenden Lichstrahls kann jeweils mittels einer sehr nahe an der Emissionskante angeordneten, auf Lichtbeugung oder -brechung beruhenden Strahlformungsoptik durch Umlagerung parallel zur Emissionskante verringert und dafür quer dazu vergrössert und der Lichtstrahl dadurch stärker konzentriert werden.

Bei Wellenlängen zwischen 850 nm und 980 nm kann der Strahl sehr eng gebündelt werden, was eine Distanzrasterung mit hoher lateraler Auflösung gestattet. Sehr vorteilhaft sind auch Wellenlängen um 1'550 nm, weil dann die im Hinblick auf die Augensicherheit gegebene Obergrenze der zulässigen Einzelpulsenergie mit ca. 8 mJ um einen Faktor von ca. 16'000 höher liegt als bei Wellenlängen zwischen 630 nm und 980 nm. Die wenigstens teilweise Ausnützung dieses Faktors, die erfindungsgemäss möglich ist, gestattet eine sehr wesentliche Steigerung der Reichweite oder - bei gegebener Reichweite - der Messgenauigkeit.

Gemäss dem ersten Schema (Fig. 1a) besteht die Lichtquelle aus zwei unmittelbar nebeneinander angeordneten Teillichtquellen 3a,b. Die Strahlsammeloptik 2 ist als beiden Teillichtquellen gemeinsame Sammeloptik 4 ausgebildet, welche von denselben ausgehende Teilstrahlen 5a,b in der Objektebene 6 des Kollimators 1 sammelt. Sie fallen derart in die Apertur des Kollimators 1, dass jeder einzelne der Teilstrahlen 5a,b die Apertur weitgehend füllt und mithin ihre Querschnitte dort weitgehend überlappen. Anschliessend an den Kollimator 1 laufen die Teilstrahlen 5a,b wieder auseinander, doch nur so weit, dass am Ziel ihre Querschnitte unmittelbar nebeneinander liegen (Fig. 1b). Der vom Sender ausgehende Lichtstrahl weist am Ziel einen etwa doppelt so grossen Lichtstrom auf wie ein von einer einzelnen Laserdiode ausgehender Lichtstrahl.

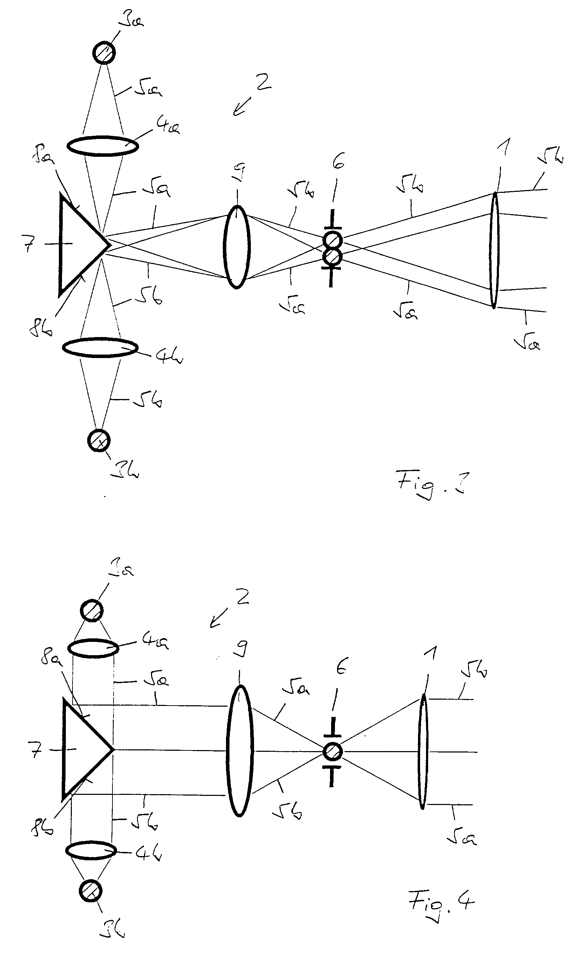

Gemäss dem zweiten Schema (Fig. 2a) sind die Teillichtquellen 3a,b weiter voneinander entfernt. Jeder ist eine eigene Sammeloptik 4a;b zugeordnet, welche wiederum den von ihr ausgehenden Teilstrahl 5a bzw. 5b in der Objektebene 6 des Kollimators 1 sammelt. Die Teilstrahlen 5a,b treffen nebeneinander auf die Apertur des Kollimators 1, und zwar derart, dass sie sie im wesentlichen vollständig füllen und anschliessend an den Kollimator 1 parallel einen Lichtstrahl von rundem Querschnitt bilden (Fig. 2b), der also am Ziel nicht nur einen etwa doppelt so hohen Lichtstrom aufweist wie ein von einer einzelnen Laserdiode ausgehender Lichtstrahl, sondern auch einen günstigeren Querschnitt.

Gemäss dem dritten Schema (Fig. 3) sind die Teillichtquellen 3a,b einander gegenüberliegend angeordnet und die Strahlsammeloptik 2 weist denselben nachgeordnete Sammeloptiken 4a;b sowie ein zwischen denselben angeordnetes Prisma 7 als Umlenkelement auf. Das Prisma 7 weist zwei Reflexionsflächen 8a,b auf, welche die von den Teillichtquellen 3a,b ausgehenden Teillichtstrahlen 5a,b in eine weitere, gemeinsame Sammeloptik 9 ablenken, welche sie in ähnlicher Weise wie bei der Lichtquelle gemäss dem ersten Schema in der Objektebene 6 des Kollimators 1 sammelt und auf dessen Apertur leitet, wo sie weitgehend überlappen. Der Strahlquerschnitt entspricht Fig. 1b. Die Verwendung eines Umlenkelements erlaubt es, die Teillichtquellen 3a,b verhältnismässig weit entfernt voneinander anzuordnen, was die Kühlung der Laserdioden erleichtert.

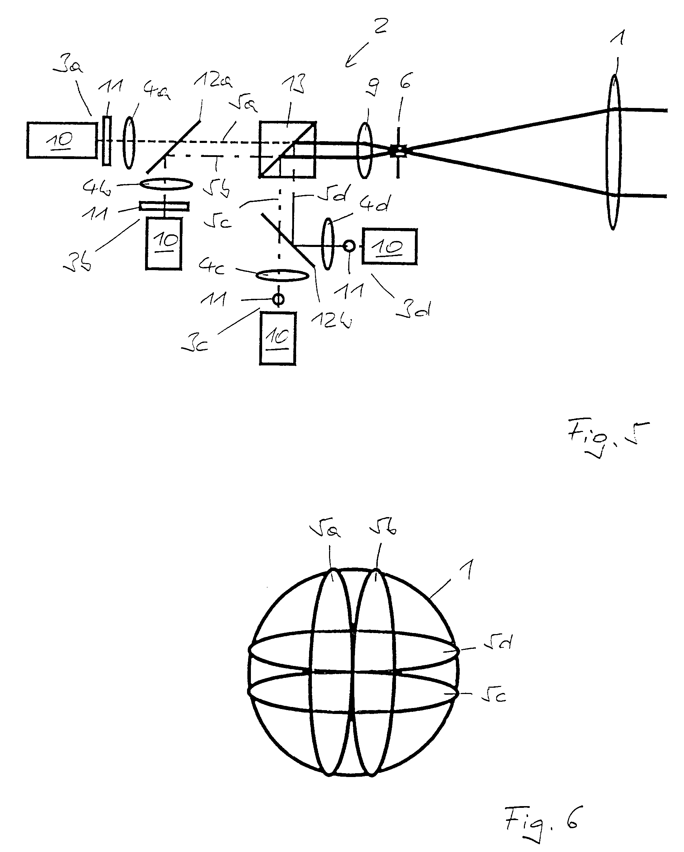

Das vierte Schema (Fig. 4) entspricht weitgehend dem dritten. Der Unterschied liegt vor allem darin, dass die Sammeloptiken 4a,b, 9 anders eingestellt sind, derart, dass ähnlich wie bei der Lichtquelle gemäss dem zweiten Schema praktisch keine Ueberlappung der Teillichtstrahlen 5a,b auftritt, sondern die Apertur des Kollimators 1 durch die nebeneinander auf sie treffenden Teilstrahlen 5a,b gefüllt wird und sie sich anschliessend an denselben im wesentlichen parallel ausbreiten, derart, dass der Strahlquerschnitt Fig. 2b entspricht.

Fig. 5 zeigt, zwar ebenfalls schematisch, aber mehr ins Einzelne gehend, den Aufbau des Senders eines erfindungsgemässen Entfernungsmessers, der einem weiteren Schema entspricht. Er enthält ausser einem Kollimator 1 und einer Strahlsammeloptik 2 Teillichtquellen 3a,b, die senkrecht zueinander ausgerichtete Teilstrahlen 5a,b gleicher Polarisation aussenden und zwei weitere Teillichtquellen 3c,d, die ebenfalls senkrecht zueinander ausgerichtete Teilstrahlen 5c,d aussenden, deren Polarisation orthogonal zu der der Teilstrahlen 5a,b ist. Die Teillichtquellen 3a,b,c,d bestehen jeweils aus einer Laserdiode 10 und einer derselben in geringem Abstand nachgeordneten Zylinderlinse 11. Jeder der Teillichtquellen 3a,b,c,d ist eine Sammeloptik 4a;b;c;d nachgeordnet.

Den Sammeloptiken 4a,b ist als erstes Umlenkelement eine Platte 12a nachgeordnet, die zur Hälfte verspiegelt und zur Hälfte durchlässig ist, so dass sie den Teilstrahl 5a durchlässt, den Teilstrahl 5b jedoch in eine zum Teilstrahl 5a parallele Richtung ablenkt. Das den Sammeloptiken 4c,d nachgeordnete zweite Umlenkelement ist wie das erste als zur Hälfte verspiegelte und zur Hälfte durchlässige Platte 12b ausgebildet, die den Teilstrahl 5c durchlässt, während sie den Teilstrahl 5d in eine zu diesem parallele Richtung ablenkt. Die Teilstrahlen 5a,b einerseits und 5c,d andererseits erreichen jeweils unmittelbar nebeneinander einen Polarisationswürfel 13, wo die Teilstrahlenpaare rechtwinklig aufeinandertreffen. Dabei überlagern sich die Teilstrahlen 5a,b jeweils teilweise mit den orthogonal zu ihnen polarisierten Teilstrahlen 5c,d, die durch eine weitere Sammeloptik 9 in der Objektebene 6 des Kollimators 1 gesammelt und auf dessen Apertur gelenkt werden, die auf diese Weise weitgehend gefüllt wird (Fig. 6). In der Mitte des kreuzförmigen Lichtflecks liegt dabei ein ungefähr quadratischer Fleck doppelter Leuchtdichte, wo sich jeweils zwei Teilstrahlen orthogonaler Polarisation überlagern.

Es sind verschiedene Abwandlungen der beschriebenen Beispiele möglich. So können vor allem bei den Schemata 1 bis 4 mehr als die gezeigten zwei Teillichtquellen eingesetzt werden. Die Sammlung von Teilstrahlen durch Umlenkelemente kann zur Vergrösserung der Zahl der Teillichtquellen kaskadiert werden etc.. Schliesslich können auch Laserdioden mit Wellenlängen vor allem zwischen 600 nm und 1'000 nm und insbesondere zwischen 630 nm und 980 nm eingesetzt werden, die ausserhalb der oben angegebenen Bereiche liegen.

### Bezugszeichenliste

- 1: Kollimator
- 2: Strahlsammeloptik
- 3a,b,c,d: Teillichtquellen
- 4, 4a,b,c,d: Sammeloptiken
- 5a,b,c,d: Teilstrahlen
- 6: Objektebene von 1
- 7: Prisma
- 8a,b: Reflexionsflächen
- 9: Sammeloptik
- 10: Laserdiode
- 11: Zylinderlinse
- 12a,b: Platten
- 13: Polarisationswürfel

## Patentansprüche

1. Optischer Entfernungsmesser mit einem Sender, welcher einen Kollimator (1) umfasst und eine demselben vorgeordnete Lichtquelle sowie mit einem Empfänger und einer Steuerungs- und Auswerteeinheit, **dadurch gekennzeichnet, dass** die Lichtquelle mehrere Teillichtquellen (3a, 3b, 3c, 3d) mit jeweils einer Laserdiode, wobei alle Laserdioden mit gleicher Wellenlänge senden, umfasst sowie eine denselben nachgeordnete Strahlsammeloptik (2) aufweist, welche die von den Teillichtquellen (3a, 3b, 3c, 3d) ausgesandten Teilstrahlen (5a, 5b, 5c, 5d) sammelt und in die Apertur des Kollimators (1) lenkt.

2. Optischer Entfernungsmesser nach Anspruch 1, **dadurch gekennzeichnet, dass** die Wellenlänge zwischen 850 nm und 980 nm liegt.

3. Optischer Entfernungsmesser nach Anspruch 1, **dadurch gekennzeichnet, dass** die Wellenlänge ca. 1'550 nm beträgt.

4. Optischer Entfernungsmesser nach einem der Ansprüche 1 bis 3, **dadurch gekennzeichnet, dass** die Strahlsammeloptik (2) mindestens eine im Strahlengang zwischen einer Teillichtquelle (3a, 3b, 3c, 3d) oder mehreren Teillichtquellen (3a, 3b, 3c, 3d) und dem Kollimator angeordnete Sammeloptik (4a, 4b, 4c, 4d, 9) aufweist.

5. Optischer Entfernungsmesser nach Anspruch 4, **dadurch gekennzeichnet, dass** jeweils mehreren Teillichtquellen (3a, 3b) eine Sammeloptik (4) unmittelbar nachgeordnet ist.

6. Optischer Entfernungsmesser nach Anspruch 6, **dadurch gekennzeichnet, dass** jeder Teillichtquelle (3a, 3b, 3c, 3d) eine eigene Sammeloptik (4a; 4b; 4c; 4d) unmittelbar nachgeordnet ist.

7. Optischer Entfernungsmesser nach einem der Ansprüche 1 bis 6, **dadurch gekennzeichnet, dass** die Strahlsammeloptik (2) mindestens ein Umlenkelement aufweist, welches jeweils mindestens einen von einer Teillichtquelle (3a, 3b, 3c, 3d) ausgehenden Teilstrahl (5a; 5b; 5c; 5d) ablenkt.

8. Optischer Entfernungsmesser nach Anspruch 7, **dadurch gekennzeichnet, dass** das mindestens eine Umlenkelement als Prisma (7) mit mehreren Reflexionsflächen (8a, 8b) ausgebildet ist.

9. Optischer Entfernungsmesser nach Anspruch 7 oder 8, **dadurch gekennzeichnet, dass** das mindestens eine Umlenkelement als mindestens teilweise verspiegelte Platte (12a, 12b) ausgebildet ist.

10. Optischer Entfernungsmesser nach einem der Ansprüche 1 bis 9, **dadurch gekennzeichnet, dass** die Strahlsammeloptik (2) mindestens ein Ueberlagerungselement aufweist zur Ueberlagerung von Teilstrahlen (5a, 5b, 5c, 5d) unterschiedlicher, vorzugsweiser orthogonaler Polarisation.

11. Optischer Entfernungsmesser nach Anspruch 10, **dadurch gekennzeichnet, dass** das mindestens eine Ueberlagerungselement als Polarisationswürfel (13) ausgebildet ist.

12. Optischer Entfernungsmesser nach einem der Ansprüche 1 bis 11, **dadurch gekennzeichnet, dass** die Strahlsammeloptik (2) geeignet ist, Teilstrahlen (5a, 5b) so in die Apertur des Kollimators (1) zu lenken, dass sie dort weitgehend überlappen.

13. Optischer Entfernungsmesser nach einem der Ansprüche 1 bis 11, **dadurch gekennzeichnet, dass** die Strahlsammeloptik (2) geeignet ist, Teilstrahlen (5a, 5b) so in die Apertur des Kollimators (1) zu lenken, dass sie dort höchstens geringfügig überlappen und sich anschliessend an denselben im wesentlichen parallel ausbreiten.
